# EUROPÄISCHE PATENTSCHRIFT

(11) **EP 2 633 607 B1**
(45) Veröffentlichungstag und Bekanntmachung des Hinweises auf die Patenterteilung: **17.01.2018**
(21) Anmeldenummer: 11764476.5
(22) Anmeldetag: 23.09.2011
(51) Int. Cl.: H02K 13/04, H02K 23/56, H02K 1/30, H02K 13/10

(54) **GLEICHSTROMELEKTROMOTOR MIT FLEXIBLEM ROTORAUFBAU SOWIE VERFAHREN ZU DESSEN HERSTELLUNG**
DIRECT-CURRENT ELECTRIC MOTOR WITH FLEXIBLE ROTOR DESIGN AND METHOD FOR PRODUCTION THEREOF
MOTEUR ÉLECTRIQUE À COURANT CONTINU AVEC STRUCTURE DE ROTOR FLEXIBLE ET PROCÉDÉS POUR LA FABRICATION DUDIT MOTEUR ÉLECTRIQUE À COURANT CONTINU

(30) Priorität: 25.10.2010 DE 102010049524
(43) Veröffentlichungstag der Anmeldung: 04.09.2013
(60) Teilanmeldung: 14002372.2
(73) Patentinhaber: Lakeview Innovation Ltd., 6374 Buochs (CH)
(72) Erfinder: TEIMEL, Arnold, CH-6074 Giswil (CH); TRIPONEZ, Yves, CH-5643 Sins (CH); MITTERBÄCK, Peter, CH-6052 Hergiswil (CH)
(74) Vertreter: Grünecker Patent- und Rechtsanwälte PartG mbB
(86) Internationale Anmeldenummer: PCT/EP2011/004784
(87) Internationale Veröffentlichungsnummer: WO 2012/055471

(56) Entgegenhaltungen:
- EP-A1- 1 855 372
- DE-A1- 10 250 142
- US-A- 4 110 901
- US-A- 4 533 848
- US-A1- 2007 007 845
- Orthmann, K.: "Kleben in der Elektronik", 1995, Expert Verlag, Renningen_Malmsheim, XP002670310, ISBN: 3-8169-1166-8 Seiten 13-14, Seite 13 - Seite 14

## Beschreibung

Die vorliegende Erfindung betrifft einen Gleichstromelektromotor nach dem Oberbegriff des Anspruchs 1 sowie ein Verfahren zur Herstellung eines derartigen Gleichstromelektromotors.

Aus dem Stand der Technik sind kleine Gleichstromelektromotoren mit eisenlosem Außenläufer bekannt. Der Rotor eines solchen Gleichstromelektromotors umfasst im Wesentlichen eine Welle, eine eisenlose hohlzylindrische Außenläuferwicklung mit mehreren Wicklungsanschlüssen sowie einen Kollektor mit mehreren Kollektordrähten, die lamellenförmig um den zylindrischen Kollektor angeordnet sind und mit den Wicklungsanschlüssen der Außenläuferwicklung elektrisch verbunden werden. Die Außenläuferwicklung ist üblicherweise einseitig am Außenumfang eines sogenannten Wicklungsträgers befestigt und wird durch diesen drehfest und koaxial zur Welle gehalten.

Ein Gleichstromelektromotor gemäß dem Stand der Technik ist beispielsweise aus DE 10021392 C2 bekannt. Der Wicklungsträger des dort beschriebenen Elektromotors wird bei der Herstellung aus Kunststoff zusammen mit dem Kollektor auf die Welle aufgespritzt. Um das aus Wicklungsträger und Kollektor bestehende Kunststoffbauteil formschlüssig in Umfangsrichtung sowie axial zu sichern, weist die Welle im Bereich der Umspritzung einen gerändelten Bereich sowie eine Ringnut auf. Die Kollektordrähte, die auf der Kollektorhülse lamellenförmig angeordnet sind, sind im Bereich des Wicklungsträgers radial nach außen gebogen, verlaufen auf der Außenseite des Wicklungsträgers sternförmig und sind mit jeweils einem der Wicklungsanschlüsse verschweißt. Durch axiale Durchgangsöffnungen des Wicklungsträgers ist auf jeden Kollektordraht jeweils ein Chipkondensator aufgelötet, wobei die Chipkondensatoren durch einen Kurzschlussring aus Kupfer sternförmig zusammengeschaltet sind und somit eine Entstörschaltung zur Funkenunterdrückung und Erhöhung der Lebensdauer des Elektromotors darstellen. Es ist auch bekannt, die Entstörschaltung in Form einer sogenannten Kondensatorscheibe von hinten oder vorne auf den Wicklungsträger aufzusetzen. Derartige Kondensatorscheiben sind zumeist aus einer speziellen Keramik oder einer Leiterplatte hergestellt und weisen geeignete Kontaktflächen zur Kontaktierung jeweils eines Kollektordrahtes auf. Die Kondensatorscheiben umfassen jeweils eine Kapazität und einen Widerstand, die seriell oder parallel jeweils zwischen zwei benachbarte Kontaktflächen und damit zwischen zwei benachbarte Kollektordrähte geschaltet sind. Die Verwendung von Kondensatorscheiben ist beispielsweise aus DE 19740551 A1 bekannt. Bei der Herstellung der beschriebenen Gleichstromelektromotoren müssen unterschiedliche Kundenwünsche berücksichtigt werden. So werden je nach Anwendung beispielsweise unterschiedliche Wellen benötigt, und/oder unterschiedliche Kollektordrähte für Edelmetall- oder Graphitbürstenkommutierung verwendet. Da sowohl Welle als auch Kollektordrähte bei den aus dem Stand der Technik bekannten Rotoren durch das Kunststoffspritzen des Wicklungsträgers und des Kollektors in einem Arbeitsgang umspritzt und damit endgültig zueinander positioniert werden, muss die gewünschte Rotorvariante bereits zu einem sehr frühen Zeitpunkt der Herstellung bekannt sein. Der bekannte Rotoraufbau bedingt daher eine geringe Flexibilität und lange Durchlaufzeiten bei der Herstellung. Ein weiterer Nachteil des bekannten Rotoraufbaus ist, dass der Wicklungsträger aus dem gespritzten Kunststoff für die erforderliche Stabilität und zur sicheren Übertragung des Motorantriebsmoments relativ dick ausgeführt sein muss, wodurch das Bauvolumen und insbesondere die Baulänge des Rotors und damit des gesamten Elektromotors relativ groß ist. Das benötigte Bauvolumen wird dabei umso größer, je mehr Anbauteile, wie beispielsweise Kondensatorscheiben zur Funkenentstörung, auf den Wicklungsträger aufgesetzt werden.

Ein Gleichstromelektromotor nach dem Oberbegriff des unabhängigen Anspruchs 1 ist aus US 4,533,848 A bekannt.

Aufgabe der vorliegenden Erfindung ist es, einen Rotoraufbau anzugeben, der eine höhere Flexibilität bei der Herstellung ermöglicht und ein geringes Bauvolumen des Rotors gewährleistet. Ebenfalls Aufgabe der vorliegenden Erfindung ist es, ein Verfahren zur Herstellung eines Gleichstromelektromotors anzugeben, das im Vergleich zu den aus dem Stand der Technik bekannten Herstellungsverfahren eine höhere Flexibilität bei der Rotorherstellung ermöglicht.

Die Aufgabe wird durch die Merkmale des Anspruchs 1 der vorliegenden Erfindung und durch die Merkmale des Anspruchs 8 der vorliegenden Erfindung gelöst. Die für die Leiterplatte verwendeten glasfaserverstärkten Duromere weisen einen Elastizitätsmodul auf, der bis zu zweimal so hoch sein kann wie der Elastizitätsmodul guter glasfaserverstärkter Thermoplaste, die im Stand der Technik zum Kunststoffspritzen des Wicklungsträgers verwendet werden. Die Leiterplatte kann daher als tragendes Bauteil wesentlich dünner ausgeführt werden als die aus dem Stand der Technik bekannten Wicklungsträger. Die Metallnabe im Zentrum der Leiterplatte erlaubt es, dass die Leiterplatte zu einem beliebigen Zeitpunkt der Rotormontage auf die Welle aufgesetzt wird. Dabei kann jeweils aus einer Vielzahl unterschiedlicher Wellen und unterschiedlicher Leiterplatten gewählt werden, wenn Leiterplatten mit einheitlichem Nabendurchmesser hergestellt werden, und die unterschiedlichen Wellen zumindest im Bereich der späteren Verbindung zur Leiterplatte ebenfalls einen einheitlichen Durchmesser aufweisen. Dies ermöglicht eine sehr flexible Rotormontage zur Umsetzung unterschiedlichster Kundenwünsche. Als Metallnabe eignet sich vorzugsweise eine Stahlnabe, ebenfalls ist die Welle vorzugsweise aus Stahl hergestellt.

Gemäß Anspruch 8 umfasst das Verfahren zur Herstellung eines derartigen Gleichstromelektromotors erfindungsgemäß folgende aufeinanderfolgende Verfahrensschritte:
Zur Montage des Rotors wird zunächst die Leiterplatte mit der Metallnabe auf die Welle gepresst; Metallnabe und Welle werden anschließend verschweißt. Dabei kann je nach Kundenwunsch aus einer Vielzahl unterschiedlicher Leiterplatten und Wellen gewählt werden. In einem nächsten Schritt wird der Kollektor mit den Kollektordrähten als separate Baugruppe auf die Welle aufgesteckt, wobei die Kollektordrähte nach Aufsetzen der Außenläuferwicklung über jeweils geeignete Kontaktflächen elektrisch mit einem zugehörigen Wicklungsanschluss verbunden werden. Da der Kollektor eine eigenständige Baugruppe darstellt, können auch hier je nach Kundenwunsch unterschiedliche Ausführungen z.B. für Edelmetall- oder Graphitbürstenkommutierung verwendet werden. Kollektordrähte und Wicklungsanschlüsse können entweder direkt oder auf einer jeweils gemeinsamen Kupferfläche der Leiterplatte verlötet werden. Anschließend werden die elektrischen und mechanischen Verbindungsstellen mit einer Vergussmasse vergossen. Dadurch wird zum einen die Stabilität erhöht, zum anderen dient die Vergussmasse zum Schutz der elektrischen Verbindungen gegenüber Kurzschlüssen, die beispielsweise durch Kohlenstaub verursacht werden, der durch Abrieb der Graphitbürsten entsteht und sich sonst auf und zwischen den Kollektordrähten bzw. Wicklungsanschlüssen absetzen könnte. Durch das erfindungsgemäße Verfahren wird der erfindungsgemäße Gleichstromelektromotor hergestellt.

Weitere Ausgestaltungen der vorliegenden Erfindung sind Gegenstand der Unteransprüche.

In einer bevorzugten Ausführungsform weist die Leiterplatte auf ihrer der Außenläuferwicklung abgewandten axialen Außenseite mehrere in Umfangsrichtung verteilte, voneinander getrennte Kupferflächen zur Kontaktierung jeweils eines Wicklungsanschlusses und eines zugehörigen Kollektordrahtes auf. Hierdurch wird die Montage des Rotors bedeutend vereinfacht. Nach Aufsetzen des Kollektors auf die bereits mit der Leiterplatte verbundene Welle können zunächst die Kollektordrähte mit jeweils einer der Kupferflächen verlötet werden. Die Verlötung findet dabei in einem radial inneren Bereich der Kupferflächen statt. Nach Aufsetzen der Außenläuferwicklung können sodann die Wicklungsanschlüsse auf einen radial äußeren Bereich jeweils einer Kupferfläche gelötet werden.

Vorteilhafterweise ist in die Leiterplatte eine Entstörschaltung zur Reduktion der Funkenbildung bei der Kommutierung integriert. Dies ermöglicht auch bei Verwendung einer

Entstörschaltung eine kompakte Bauweise, wobei zusätzliche Arbeitsschritte für den Einbau der Entstörschaltung bei der Montage des Rotors entfallen. Derartige Entstörschaltungen verlängern die Lebensdauer eines Motors mit Edelmetallbürsten beträchtlich und reduzieren gleichzeitig die elektromagnetische Abstrahlung beim Betrieb des Motors.

In einer besonders bevorzugten Ausführungsform ist die Leiterplatte in axialer Richtung mehrschichtig aufgebaut. Dadurch können Schaltungen, die auf inneren Schichten der Leiterplatte aufgebracht sind, von den äußeren Schichten der Leiterplatte geschützt in die Leiterplatte integriert werden. Als besonders vorteilhaft hat es sich herausgestellt, wenn die elektrischen Bauelemente der Entstörschaltung auf eine innenliegende Schicht der mehrschichtigen Leiterplatte mittels der sogenannten "Embedded"-Technologie integriert sind, und somit durch die äußeren Schichten der Leiterplatte z.B. vor Belastungen durch das Handling bei der Montage geschützt sind. Da die auf dem Wicklungsträger in axialer Richtung zur Verfügung stehende kreisringförmige Fläche sehr wenig Platz für die Bestückung der Bauelemente auf der Außenfläche aufgrund der Kontaktierung der Wicklungsanschlüsse und eventuell zusätzlicher elektrischer Verbindungen zum Kollektor bietet, ist es nur mit Hilfe der beschriebenen "Embedded-Technolgie" möglich geworden, auch bei Kleinmotoren mit einem Durchmesser kleiner als 13 mm eine Endstörschaltung zu integrieren. Zusätzlich können durch eine Anordnung der Bauelemente in den Innenlagen der Leiterplatte größere Gehäuseformen, die mehr Verlustleistung zulassen, eingesetzt werden, wodurch deren Lebensdauer verlängert wird. Auch wird durch die bessere Wärmeleitfähigkeit des Platinenmaterials gegenüber Luft die entstehende Verlustwärme besser abgeleitet. Ebenfalls vorteilhaft bei mehrschichtigen Leiterplatten ist es, wenn die Metallnabe der Leiterplatte mit zumindest einer Radialnut und/oder Radialfeder formschlüssig in die mehrschichtige Leiterplatte eingebettet ist. Dabei können auch in Umfangsrichtungen der Metallnabe Formschlusselemente, beispielsweise Zähne, ausgebildet sein, welche die Leiterplatte und deren Metallnabe neben dem axialen Formschluss durch die Radialnut oder Radialfeder ebenso gegen eine Verdrehung zueinander sichern.

In einer weiteren vorteilhaften Ausführungsform kann die Metallnabe beim Herstellungsprozess der Leiterplatte in eine oder mehrere Schichten der Leiterplatte eingebettet werden.

Einfach und kostengünstig in der Herstellung ist es, wenn die Metallnabe in die Leiterplatte eingepresst und mit dieser verbördelt bzw. radial vernietet ist.

Erfindungsgemäß ist die Metallnabe kraftschlüssig und stoffschlüssig mit der Welle verbunden. Hierdurch werden eine maximale Stabilität und eine optimale Übertragung des Motordrehmoments gewährleistet. Der Kraftschluss erfolgt durch Aufpressen der Metallnabe auf die Welle, wobei der Stoffschluss durch eine Verschweißung herbeigeführt wird. Besonders genaue und verzugsfreie Schweißungen wurden durch Laserschweißen erreicht. Laserschweißen ist zudem kostengünstig und ermöglicht einen schnellen Herstellungsprozess.

Ausführungsbeispiele der vorliegenden Erfindung werden im Folgenden anhand von Zeichnungen näher erläutert. Es zeigen:
**Fig. 1a**, ein erstes Ausführungsbeispiel eines Rotors eines erfindungsgemäßen Gleichstromelektromotors,
**Fig. 1b**, den Rotor aus Fig. 1 a mit Abdeckung des Verbindungsbereichs durch eine Vergussmasse im Bereich der Verbindung zwischen Außenläuferwicklung und Kollektor,
**Fig. 2**, die Leiterplatte des Rotors aus den Fig. 1 a und 1b in einer Detailansicht,
**Fig. 3**, den Kollektor des Rotors aus den Fig. 1 a und 1b in einer Detailansicht,
**Fig. 4**, eine alternative Ausführung des Kollektors aus Fig. 3,
**Fig. 5**, ein weiteres Ausführungsbeispiel eines Rotors eines erfindungsgemäßen Gleichstromelektromotors.

Im Folgenden werden mit gleichen Bezugszeichen gleiche Teile bezeichnet.

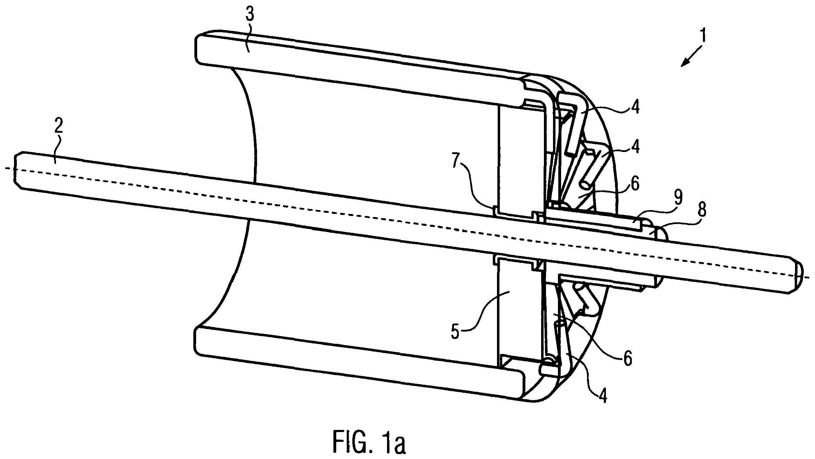

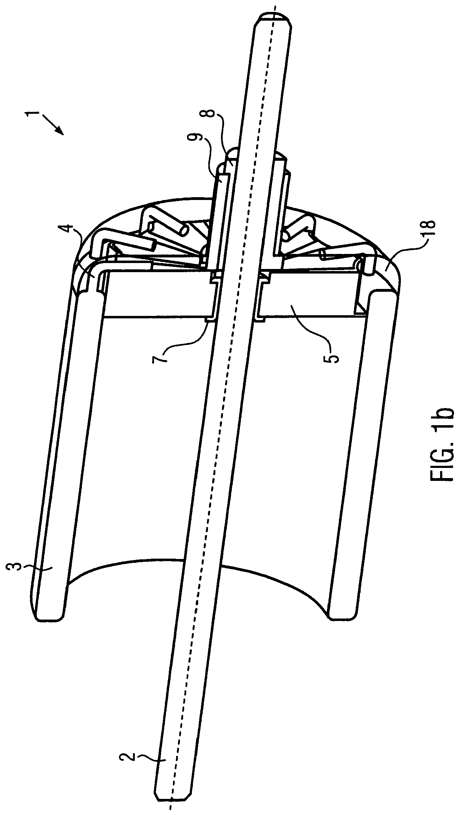

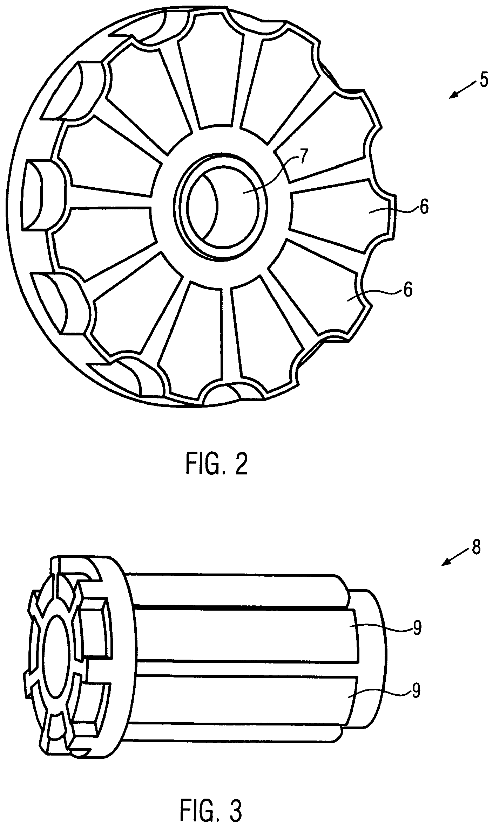

Fig. 1 a zeigt einen Längsschnitt durch einen Rotor 1 eines erfindungsgemäßen Gleichstromelektromotors, der als Glockenankerrotor für Motoren kleiner Baugröße mit Metall- oder Graphitbürstenkommutierung ausgeführt ist. Der Rotor 1 besteht im Wesentlichen aus einer Welle 2, einer eisenlosen Außenläuferwicklung 3 und einem Kollektor 8. Die Außenläuferwicklung 3 ist an einem Ende am Außenumfang einer Leiterplatte 5 befestigt, die ihrerseits über eine Metallnabe 7 mit der Welle verbunden ist. Die Leiterplatte 5 stellt somit ein tragendes Bauteil dar und ist aus glasfaserverstärktem Epoxydharz gefertigt. Die üblicherweise als Kupferdraht gewickelte Außenläuferwicklung 3 wird über die Leiterplatte 5 drehfest zur Welle 2 und koaxial zu dieser gehalten. Eine Detailansicht der Leiterplatte 5 ist in Fig. 2 abgebildet, Fig. 3 zeigt die Detailansicht des Kollektors 8. Die Metallnabe 7 der Leiterplatte 5 ist aus Stahl gefertigt und auf die ebenfalls aus Stahl bestehende Welle 2 des Rotors 1 aufgepresst und mit dieser verschweißt. Der hülsenförmige Kollektor 8 ist in seinem Durchmesser bedeutend kleiner als die Leiterplatte 5 und weist auf seinem Außenumfang die lamellenförmig angeordneten Kollektordrähte 9 auf. Jeder Kollektordraht 9 ist über eine Kupferfläche 6 der Leiterplatte 5 elektrisch mit einem Wicklungsanschluss 4 der Außenläuferwicklung 3 verbunden. Die Kupferflächen 6 der Leiterplatte 5 sind dazu sternförmig und voneinander getrennt auf der Außenseite der Leiterplatte 5 angeordnet. Zur Montage des Rotors 1 werden zunächst Welle 2, Leiterplatte 5 und Kollektor 8 entsprechend den Kundenwünschen aus einer Vielzahl alternativer Bauteile ausgewählt. Die Leiterplatte 5 umfasst zu diesem Zeitpunkt bereits die eingepresste und verbördelte Stahlnabe 7. Der Kollektor 8 ist als eigene Baugruppe bereits mit den gewünschten Kollektordrähten 9 bestückt. Zunächst wird nun die Leiterplatte 5 auf die Welle 2 aufgepresst und mit dieser verschweißt. Im nächsten Schritt wird der hohlzylindrische Kollektor 8 über die Welle 2 bis zur Leiterplatte 5 aufgeschoben, sodass ein Kontakt zwischen den Kollektordrähten 9 und den Kupferflächen 6 der Leiterplatte 5 besteht. Die Kollektordrähte 9 und die Kupferflächen 6 werden anschließend miteinander verlötet. Dann wird die hohlzylindrische Außenläuferwicklung 3 auf die Leiterplatte 5 aufgesetzt, wobei die Wicklungsanschlüsse 4 der Außenläuferwicklung 3 ebenfalls mit den Kupferflächen 6 der Leiterplatte verlötet werden.

Fig. 1b zeigt, dass Leiterplatte sowie Anschlüsse in einem letzten Schritt durch eine Vergussmasse 18 abgedeckt werden, die zum einen die Stabilität erhöht und zum anderen das Auftreten von Kurzschlüssen verhindert, die durch Partikel verursacht werden können, die sich auf den Wicklungsanschlüssen 4, den Kupferflächen 6 oder den Kollektordrähten 9 im Bereich der Leiterplatte 5 absetzen können.

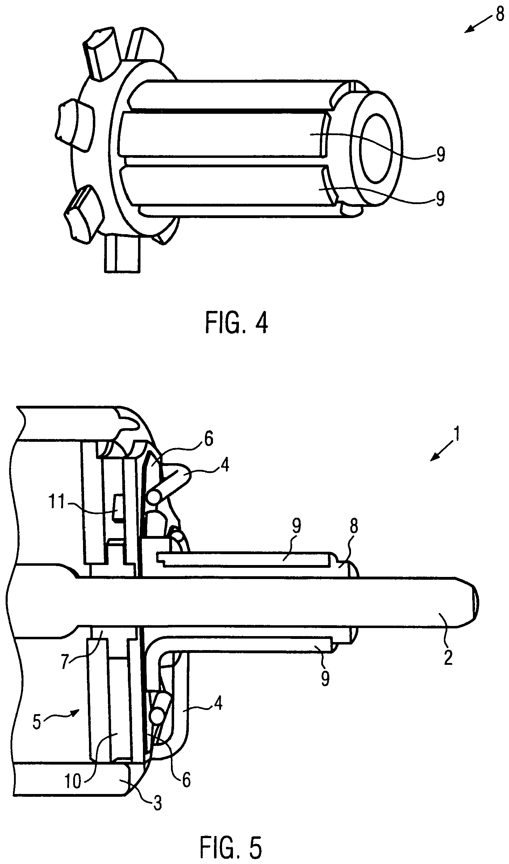

Fig. 4 ist eine alternative Ausführung des Kollektors 8 mit sternförmig radial nach außen gebogenen Kollektordrähten 9. Durch die sternförmig nach außen gebogenen Kollektordrähte 9 wird die Kontaktfläche zwischen Kollektordraht 9 und Kupferfläche 6 der Leiterplatte 5 vergrößert, was den elektrischen Kontakt verbessert.

Fig. 5 zeigt ein alternatives Ausführungsbeispiel eines Rotors eines erfindungsgemäßen Gleichstromelektromotors. Es handelt sich wiederum um einen Glockenankerrotor für Rotoren kleiner Baugröße mit Metall- oder Graphitbürstenkommutierung. Im Gegensatz zum Ausführungsbeispiel der Figuren 1 a und 1b ist die Leiterplatte 5 mehrschichtig aufgebaut. Eine innere Lage 10 der Leiterplatte 5 ist mit den Bauelementen zur Reduktion der Funkenbildung bei der Kommutierung, sowie zur Verminderung der elektromagnetischen Abstrahlung im Betrieb des Elektromotors bestückt. Die Entstörschaltung besteht aus den elektrischen Bauteilen 11, die jeweils aus einem Kondensator und einem Widerstand bestehen, welche seriell oder parallel zwischen die Kupferflächen 6 der äußeren Schicht der Leiterplatte 5 geschaltet sind. Die Stahlnabe 7 der Leiterplatte 5 wird beim Herstellungsprozess der Leiterplatte 5 mit ihrer radial verlaufenden Feder in den mehrschichtigen Aufbau der Leiterplatte 5 eingebettet. In diesem Ausführungsbeispiel kommt der alternative Kollektor 8 aus Fig. 4 zum Einsatz. Auch hier werden Leiterplatte und Anschlüsse von außen mit einer Vergussmasse abgedeckt, um die Stabilität zu erhöhen und Kurzschlüsse auszuschließen.

## Patentansprüche

1. Gleichstromelektromotor, insbesondere mit kleinen Abmessungen, mit einer Welle (2), einem Wicklungsträger in Form einer zumindest einschichtig ausgeführten Leiterplatte (5) als tragendes Bauteil, einem Kollektor (8), und einer eisenlosen Außenläuferwicklung (3) mit mehreren Wicklungsanschlüssen (4), wobei die Leiterplatte (5) mit der Welle (2) über eine Metallnabe (7) verbunden ist, wobei die Außenläuferwicklung (3) an einem Ende über die Leiterplatte (5) drehfest mit der Welle (2) verbunden ist, und wobei die Außenläuferwicklung (3) elektrisch mit dem Kollektor (8) verbunden ist, **dadurch gekennzeichnet, dass** der Kollektor (8) mehrere Kollektordrähte (9) aufweist, wobei die Leiterplatte (5) aus einem glasfaserverstärkten Duromer gefertigt ist, wobei die Metallnabe (7) kraftschlüssig und stoffschlüssig mit der Welle (2) verbunden ist, wobei die Metallnabe (7) auf die Welle (2) aufgepresst und mit der Welle (2) verschweißt ist.

2. Gleichstromelektromotor nach Anspruch 1, **dadurch gekennzeichnet, dass** die Leiterplatte (5) auf ihrer der Außenläuferwicklung (3) abgewandten axialen Außenseite mehrere in Umfangsrichtung verteilte, voneinander getrennte Kupferflächen (6) zur Kontaktierung jeweils eines Wicklungsanschlusses (4) und eines zugehörigen Kollektordrahtes (9) aufweist.

3. Gleichstromelektromotor nach einem der Ansprüche 1 oder 2, **dadurch gekennzeichnet, dass** in die Leiterplatte (5) eine Entstörschaltung zur Reduktion der Funkenbildung bei der Kommutierung integriert ist.

4. Gleichstromelektromotor nach einem der Ansprüche 1 bis 3, **dadurch gekennzeichnet, dass** die Leiterplatte (5) in axialer Richtung mehrschichtig aufgebaut ist.

5. Gleichstromelektromotor nach Anspruch 4, **dadurch gekennzeichnet, dass** die elektrischen Bauelemente der Entstörschaltung auf eine innenliegende Schicht (10) der mehrschichtigen Leiterplatte (5) integriert sind.

6. Gleichstromelektromotor nach einem der Ansprüche 4 oder 5, **dadurch gekennzeichnet, dass** die Metallnabe (7) mit zumindest einer Radialnut und/oder Radialfeder formschlüssig in die mehrschichtige Leiterplatte (5) eingebettet ist.

7. Gleichstromelektromotor nach einem der Ansprüche 1 bis 4, **dadurch gekennzeichnet, dass** die Metallnabe (7) in die Leiterplatte (5) eingepresst und mit dieser verbördelt bzw. radial vernietet ist.

8. Verfahren zur Herstellung eines Gleichstromelektromotors nach einem der Ansprüche 1 bis 7, wobei der Gleichstromelektromotor aufweisend eine Welle (2), einen Wicklungsträger in Form einer zumindest einschichtig ausgeführten Leiterplatte (5) als tragendes Bauteil, einen Kollektor (8), und eine eisenlose Außenläuferwicklung (3) mit mehreren Wicklungsanschlüssen (4) aufweist, wobei die Leiterplatte (5) mit der Welle (2) über eine Metallnabe (7) verbunden ist, wobei die Außenläuferwicklung (3) an einem Ende über die Leiterplatte (5) drehfest mit der Welle (2) verbunden ist, wobei die Außenläuferwicklung (3) elektrisch mit dem Kollektor (8) verbunden ist, wobei der Kollektor (8) mehrere Kollektordrähte (9) aufweist, wobei die Leiterplatte (5) aus einem glasfaserverstärkten Duromer gefertigt ist, wobei die Metallnabe (7) kraftschlüssig und stoffschlüssig mit der Welle (2) verbunden ist, wobei die Metallnabe (7) auf die Welle (2) aufgepresst und mit der Welle (2) verschweißt ist, durch das besagte Verfahren hergestellt wird, wobei zur Montage des Rotors (1) zuerst die Leiterplatte (5) mit der Metallnabe (7) auf die Welle (2) gepresst wird, und Metallnabe (7) und Welle (2) anschließend verschweißt werden, der Kollektor (8) mit den Kollektordrähten (9) in einem nächsten Schritt als separate Baugruppe auf die Welle (2) aufgesteckt wird, die Kollektordrähte (9) nach Aufsetzen der Außenläuferwicklung (3) über jeweils geeignete Kontaktflächen elektrisch mit einem zugehörigen Wicklungsanschluss (4) verbunden werden, und anschließend die elektrischen und mechanischen Verbindungsstellen mit einer Vergussmasse (18) vergossen werden.

9. Verfahren nach Anspruch 8, **dadurch gekennzeichnet, dass** Metallnabe (7) und Welle (2) mittels Laserschweißen verschweißt werden.

## Claims

1. Electric direct current motor, in particular of small dimensions, having a shaft (2), a winding support in the form of a printed circuit board (5) as a bearing component designed with at least one layer, a collector (8), and an air-cored outer rotor winding (3) with several winding terminations (4), wherein the circuit board (5) is connected with the shaft (2) via a metal hub (7), wherein the outer rotor winding (3) is connected at one end to the shaft (2) via the printed circuit board (5) in a torque-proof manner, and wherein the outer rotor winding (3) is electrically connected to the collector (8), **characterized in that** the collector (8) has several collector wires (9), wherein the circuit board (5) is made of glass-fiber reinforced thermosetting plastics, wherein the metal hub (7) is connected to the shaft (2) by frictional and material bonding connections, wherein the metal hub (7) is pressed onto the shaft (2) and welded to the shaft (2).

2. Electric direct current motor according to claim 1, **characterized in that** the printed circuit board (5) comprises, on its axial outer side opposed to the outer rotor winding (3), several separate copper surfaces (6) distributed in the circumferential direction for contacting one winding termination (4) and one corresponding collector wire (9) each.

3. Electric direct current motor according to one of claims 1 or 2, **characterized in that** an interference suppression circuit for reducing sparking during commutation is integrated in the printed circuit board (5).

4. Electric direct current motor according to one of claims 1 to 3, **characterized in that** the printed circuit board (5) has a multilayer design in the axial direction.

5. Electric direct current motor according to claim 4, **characterized in that** the electric components of the interference suppression circuit are integrated on an inner layer (10) of the multilayer printed circuit board (5).

6. Electric direct current motor according to one of claims 4 or 5, **characterized in that** the metal hub (7) is positively embedded with at least one radial groove and/or radial tongue in the multilayer printed circuit board (5).

7. Electric direct current motor according to one of claims 1 to 4, **characterized in that** the metal hub (7) is pressed into the printed circuit board (5) and bordered or radially riveted with the latter.

8. Method for the manufacture of an electric direct current motor according to one of claims 1 to 7, wherein the electric direct current motor comprising
a shaft (2), a winding support in the form of a printed circuit board (5) as a bearing component designed with at least one layer, a collector (8), and an air-cored outer rotor winding (3) with several winding terminations (4), wherein the circuit board (5) is connected with the shaft (2) via a metal hub (7), wherein the outer rotor winding (3) is connected at one end to the shaft (2) via the printed circuit board (5) in a torque-proof manner, wherein the outer rotor winding (3) is electrically connected to the collector (8), wherein the collector (8) has several collector wires (9), wherein the circuit board (5) is made of glass-fiber reinforced thermosetting plastics, wherein the metal hub (7) is connected to the shaft (2) by frictional and material bonding connections, wherein the metal hub (7) is pressed onto the shaft (2) and welded to the shaft (2),
is manufactured according to said method,
wherein for assembling the rotor (1), first the printed circuit board (5) is pressed with the metal hub (7) onto the shaft (2), and the metal hub (7) and the shaft (2) are subsequently welded to each other, the collector (8) with the collector wires (9) is in a next step placed as a separate unit onto the shaft (2), the collector wires (9) are electrically connected to a pertaining winding termination (4) via respective suited contact surfaces after the outer rotor winding (3) has been placed, and subsequently the electrical and mechanical connection points are cast with a casting compound (18).

9. Method according to claim 8, **characterized in that** the metal hub (7) and the shaft (2) are welded to each other by means of laser welding.

## Revendications

1. Moteur électrique à courant continu, notamment de petites dimensions, comprenant un arbre (2), un support d'enroulement sous la forme d'une plaque de circuit imprimé (5) à au moins une couche en tant que pièce porteuse, un collecteur (8), et un enroulement de rotor extérieur (3) exempt de fer avec plusieurs raccords de branchement d'enroulement (4), moteur
dans lequel la plaque de circuit imprimé (5) est reliée à l'arbre (2) par l'intermédiaire d'un moyeu de métal (7),
dans lequel l'enroulement de rotor extérieur (3) est, à une extrémité, reliée de manière fixe en rotation, à l'arbre (2) par l'intermédiaire de la plaque de circuit imprimé (5),
et dans lequel l'enroulement de rotor extérieur (3) est relié électriquement au collecteur (8),
**caractérisé en ce que** le collecteur (8) présente plusieurs lamelles de collecteur (9), la plaque de circuit imprimé (5) étant fabriquée en un duromère renforcé de fibres de verre, le moyeu de métal (7) étant relié à l'arbre (2) par adhérence et continuité de matière, et le moyeu de métal (7) étant monté à force sur l'arbre (2) et soudé à l'arbre (2).

2. Moteur électrique à courant continu selon la revendication 1, **caractérisé en ce que** la plaque de circuit imprimé (5) présente sur son côté extérieur axial opposé à celui dirigé vers l'enroulement de rotor extérieur (3), plusieurs surfaces de cuivre (6) réparties le long de la direction périphérique, séparées les unes des autres et destinées à assurer respectivement le contact avec un raccord de branchement d'enroulement (4) et d'une lamelle de collecteur (9) associée.

3. Moteur électrique à courant continu selon l'une des revendications 1 ou 2, **caractérisé en ce que** dans la plaque de circuit imprimé (5) est intégré un circuit de déparasitage pour réduire la formation d'étincelles lors de la commutation.

4. Moteur électrique à courant continu selon l'une des revendications 1 à 3, **caractérisé en ce que** la plaque de circuit imprimé (5) est d'une structure à couches multiples, dans la direction axiale.

5. Moteur électrique à courant continu selon la revendication 4, **caractérisé en ce que** les composants électriques du circuit de déparasitage sont intégrés sur une couche (10) située à l'intérieur de la plaque de circuit imprimé (5) à couches multiples.

6. Moteur électrique à courant continu selon l'une des revendications 4 ou 5, **caractérisé en ce que** le moyeu de métal (7) est encastré par complémentarité de formes, avec au moins une rainure radiale et/ou nervure radiale, dans la plaque de circuit imprimé (5) à couches multiples.

7. Moteur électrique à courant continu selon l'une des revendications 1 à 4, **caractérisé en ce que** le moyeu de métal (7) est monté à force dans la plaque de circuit imprimé (5), et est lié à celle-ci par collet rabattu et/ou sertissage radial.

8. Procédé de fabrication d'un moteur électrique à courant continu selon l'une des revendications 1 à 7, ledit procédé assurant la fabrication dudit moteur électrique à courant continu comprenant un arbre (2), un support d'enroulement sous la forme d'une plaque de circuit imprimé (5) à au moins une couche en tant que pièce porteuse, un collecteur (8), et un enroulement de rotor extérieur (3) exempt de fer avec plusieurs raccords de branchement d'enroulement (4), moteur dans lequel la plaque de circuit imprimé (5) est reliée à l'arbre (2) par l'intermédiaire d'un moyeu de métal (7), dans lequel l'enroulement de rotor extérieur (3) est, à une extrémité, reliée de manière fixe en rotation, à l'arbre (2) par l'intermédiaire de la plaque de circuit imprimé (5), dans lequel l'enroulement de rotor extérieur (3) est relié électriquement au collecteur (8), dans lequel le collecteur (8) présente plusieurs lamelles de collecteur (9), dans lequel la plaque de circuit imprimé (5) est fabriquée en un duromère renforcé de fibres de verre, dans lequel le moyeu de métal (7) est relié à l'arbre (2) par adhérence et continuité de matière, et dans lequel le moyeu de métal (7) est monté à force sur l'arbre (2) et soudé à l'arbre (2), procédé d'après lequel
pour le montage du rotor (1), la plaque de circuit imprimé (5) avec le moyeu de métal (7), est tout d'abord montée sur l'arbre (2), et le moyeu de métal (7) est ensuite soudé avec l'arbre (2),
le collecteur (8) avec les lamelles de collecteur (9), en tant que sous-groupe séparé, est engagé sur l'arbre (2), au cours d'une étape suivante,
les lamelles de collecteur (9) sont ensuite, après mise en place de l'enroulement de rotor extérieur (3), reliées électriquement, respectivement par l'intermédiaire de surfaces de contact appropriées, à un raccord de branchement d'enroulement (4) associé, et les zones de liaison électriques et mécaniques sont ensuite scellées à l'aide d'une masse de scellage (18).

9. Procédé selon la revendication 8, **caractérisé en ce que** le moyeu de métal (7) et l'arbre (2) sont soudés l'un à l'autre par soudage laser.
